(19) Europäisches Patentamt
European Patent Office
Office européen des brevets

(11) **EP 2 696 094 A2**

(12) **EUROPÄISCHE PATENTANMELDUNG**

(43) Veröffentlichungstag:
**12.02.2014 Patentblatt 2014/07**

(51) Int Cl.:
*F16F 1/04* (2006.01)   *F16F 1/366* (2006.01)
*F16F 1/36* (2006.01)

(21) Anmeldenummer: **13173064.0**

(22) Anmeldetag: **20.06.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.08.2012   DE 102012015644**

(71) Anmelder: **AUDI AG**
**85045 Ingolstadt (DE)**

(72) Erfinder: **Schmitt, Joachim**
**85051 Ingolstadt (DE)**

(54) **Feder, insbesondere Tragfeder für ein Kraftfahrzeug**

(57)     Feder, insbesondere Tragfeder für ein Kraftfahrzeug, bestehend aus einem Faserverbundwerkstoff, wobei wenigstens ein Metallfaden (5) vorgesehen ist, der seinen elektrischen Widerstand in Abhängigkeit der Verformung der Feder (1) ändert.

FIG. 1

**Beschreibung**

Die Erfindung betrifft eine Feder, insbesondere eine Tragfeder für ein Kraftfahrzeug, bestehend aus einem Faserverbundwerkstoff.

Federn kommen in unterschiedlichsten Bereichen zur Anwendung. Ein Beispiel ist der Einsatz einer solchen Feder als Tragfeder für ein Kraftfahrzeug, welche Tragfeder einem Stoßdämpfer zugeordnet oder Teil eines solchen ist. Über einen solchen Stoßdämpfer umfassend eine solche Tragfeder sind die einzelnen Räder des Fahrzeugs karosserieseitig abgestützt. Eine Feder für einen solchen Einsatz ist üblicherweise als Schraubenfeder, also mit zylindrischer Grundform, ausgeführt. Daneben sind aber auch Federn anderer geometrischer Auslegung hinlänglich bekannt, beispielsweise Spiralfedern, Blattfedern, Tellerfedern etc. Auch solche Federn kommen mannigfaltig zur Anwendung.

Grundsätzliche Aufgabe einer solchen Feder ist es, Kräfte aufzunehmen und abzubauen oder zu speichern. In jedem Fall kommt es bei Krafteinleitung zu einer Deformation der Feder, also zu einer Geometrieänderung.

Üblicherweise werden Federn aus Metall oder einem metallischen Werkstoff hergestellt. Es ist aber auch bekannt, solche Federn aus einem Faserverbundwerkstoff zu fertigen, siehe beispielsweise US 7,311,124 B2 oder US 2009/0243174 A1. Eine solche Verbundwerkstofffeder besteht beispielsweise aus einer flexiblen Seele, die von mehreren Lagen eines harzgetränkten Fasergewebes, beispielsweise Glasfaser- oder Kohlenstofffaser, umgeben ist. Das Harz, also die Matrix des Fasergebildes, härtet aus, woraus in Verbindung mit den versteifenden Eigenschaften der integrierten Fasern die Feder ihre definierten Federeigenschaften erhält. Alternativ zum Umhüllen der flexiblen Seele mit fertigen Fasergeweben oder -gelegen ist es auch denkbar, derartige Fasergelege durch Wickeln einzelner Fasern oder Fäden um die elastische Seele herum auszubilden, wobei diese einzelnen Fäden durch ein flüssiges Harz gezogen werden, siehe hierzu beispielsweise US 7,311,124 B2. Wie unterschiedliche Fasern sowohl hinsichtlich Material als auch Länge als auch Anordnung verwendet werden können, können selbstverständlich auch unterschiedliche Harze, also Matrizen, verwendet werden. Bevorzugt sind härtende Harze wie Epoxiharz, Vinylesterharz oder Polyesterharz.

Wie ausgeführt dienen diese Federn dazu, Relativbewegungen zwischen zwei über sie bewegungsgekoppelten Teilen einerseits zu ermöglichen, andererseits als Kraftspeicher zu fungieren etc. Für manche Anwendungen, beispielsweise im Kraftfahrzeug zur Steuerung von den Betrieb des Kraftfahrzeugs beeinflussenden Fahrerassistenz- oder Regelsystemen wie das elektronische Stabilitätsprogramm, das Antiblockiersystem, die automatische Dämpferregelung etc. wäre eine Information über die gegebenen Kraftverhältnisse im Federbereich zweckmäßig, wobei ein solcher Informationsgewinn selbstverständlich nicht auf diesen Anwendungsbereich begrenzt ist. Irgendwelche Informationen hierüber sind im Stand der Technik jedoch nicht abgreifbar.

Der Erfindung liegt damit das Problem zugrunde, eine Feder anzugeben, die es ermöglicht, Informationen über die federseitig gegebenen Kraftverhältnisse zu erfassen.

Zur Lösung dieses Problems ist bei der Feder der eingangs genannten Art erfindungsgemäß wenigstens ein Metallfaden vorgesehen, der seinen elektrischen Widerstand in Abhängigkeit der Verformung der Feder ändert.

Die erfindungsgemäße Feder aus einem Faserverbundwerkstoff zeichnet sich durch wenigstens einen federseitig fest angeordneten und jedwede Verformung der Feder mitvollziehenden Metallfaden aus, der infolge einer Geometrieänderung der Feder, die zwangsläufig aus einer Veränderung der federseitig anliegenden Kräfte resultiert, seinen elektrischen Widerstand ändert. Dieser elektrische Widerstand kann nun durch eine geeignete nachgeschaltete Steuerungseinrichtung ohne weiteres erfasst werden. Der erfasste Ist-Widerstand, wie er also entsprechend gemessen wird, korreliert mit einer entsprechenden Verformung der Feder, die wiederum zwangsläufig mit definierten Kraftverhältnissen korreliert. Bei Integration der erfindungsgemäßen Feder in Form von vier Tragfedern in einem Kraftfahrzeug ist im unbelasteten Zustand des Fahrzeugs beispielsweise ein definierter Ausgangszustand gegeben. Dieser kann beispielsweise als Referenzzustand verwendet werden. Jede Belastung des Fahrzeugs, sei es durch eingebrachtes Gewicht, sei es im Betrieb durch entsprechende Lastwechsel etc., führt zu einer entsprechenden Geometrieänderung der einzelnen Federn, die wiederum in definierten Widerstandsänderungen resultieren. Durch Erfassung des jeweiligen Widerstands kann folglich eine genaue Korrelation zur eingeleiteten Kraft erfolgen, das heißt, dass hieraus unmittelbar die Federkraft bzw. die Radaufstandskraft bestimmt werden kann.

Diese Information kann nun, bezogen auf den Anwendungsfall der erfindungsgemäßen Federn als Tragfedern im Kraftfahrzeug, zur Regelung entsprechender Fahrerassistenz- oder Regelsysteme wie des elektronischen Stabilitätsprogramms, des Antiblockiersystems oder der Dämpferregelung zur Beeinflussung des Fahrwerks genutzt werden, wie hierüber auch anhand der ermittelten Radaufstandskraft das maximale Haftpotential des Reifens auf der Fahrbahn ausgenutzt werden kann.

Als ein solcher Metallfaden kann jeder Faden verwendet werden, der einen definierten, vorzugsweise linearen Widerstandsverlauf in Abhängigkeit der Federverformung zeigt, wobei ein linearer Zusammenhang selbstverständlich nicht Voraussetzung ist. Es ist ausreichend, wenn ganz grundsätzlich ein definierter, bekannter Zusammenhang zwischen Widerstand und Fadengeometrie gegeben und bekannt ist und steuereinrichtungsseitig abgelegt ist.

Dabei besteht bei Anwendungen im Kraftfahrzeug grundsätzlich die Möglichkeit, zu unterschiedlichen Temperaturen, beispielsweise gestaffelt in Intervallen, entsprechende Widerstands-Kraft-Kennfelder abzulegen. Der elektrische

Widerstand ist bekanntlich auch eine Funktion der Temperatur. Um im Falle größerer Temperaturschwankungen im Hinblick auf Einsatzbereiche des Kraftfahrzeugs, die bei tiefen Minusgraden von bis zu -40° wie auch bei hohen Temperaturen bis zu +60° betrieben werden, auch in extremen Fällen die entsprechenden Kraftverhältnisse noch korrekt bestimmen zu können, bietet sich eine solche temperaturgestaffelte Kennfeldaufspreizung an. Die gegebene Temperatur kann beispielsweise fahrzeugseitig ohne weiteres durch einen entsprechenden, die Außentemperatur erfassenden Temperaturfühler erfasst werden, woraufhin die Steuerungseinrichtung das entsprechende, temperaturbezogene Kennfeld auswählt und gestützt auf dieses in Verbindung mit der Widerstandsmessung die entsprechenden Kräfte bestimmt.

Wenngleich es bereits ausreichend ist, nur einen Metallfaden federseitig vorzusehen, ist es zweckmäßig, wenn mehrere separat hinsichtlich ihrer Widerstandsänderung erfassbare Metallfäden vorgesehen sind. Hieraus resultiert die Möglichkeit, einerseits redundante Widerstandswerte zu erfassen, um Sicherheit zu haben, dass bei aus welchem Grund auch immer gegebenem Ausfall eines Metallfadens mindestens ein weiterer Widerstandsmesswert zur Verfügung steht. Darüber hinaus besteht die Möglichkeit, bei Erfassung mehrerer Widerstandswerte einen führenden Widerstandswert hinsichtlich seiner Plausibilität durch Vergleich mit den anderen Widerstandswerten zu prüfen und bei erfasster Plausibilität der weiteren Steuerung/Regelung zugrunde zu legen.

Hinsichtlich der geometrischen Anordnung des oder Metallfäden sind unterschiedliche Ausgestaltungen denkbar. Es ist möglich, den oder die Metallfäden im Inneren der Feder zu integrieren oder an der Außenseite der Feder anzuordnen, gegebenenfalls unter einem entsprechenden Schutzlack oder dergleichen. Beispielsweise kann ein Metallfaden einfach längs der Feder, also parallel zur innenliegenden Seele verlaufen und in die Harz-Faser-Matrix eingebettet sein. Dies ist beispielsweise möglich, wenn diese Matrix durch Umwickeln der im Ausgangszustand länglichen Seele mit harzgetränkten Fasergeweben und Ähnlichem und anschließendem Informpressen zur gewünschten Federform gebildet wird. Alternativ ist es denkbar, dass sich auch der oder die Metallfäden, wie die Matrixfäden, um die innenliegende Seele winden, was beispielsweise durch Anwendung des Herstellungsprinzips gemäß US 7,311,124 B2 realisiert werden kann, wo aus einem Fadenreservoir, das um die längsbewegte Seele rotiert, der Faden abgespult wird. Wird hier über ein Metallfadenreservoir der Metallfaden zugeführt, so kommt es zwangsläufig zu einer helixartigen Umwindung der inneren Seele durch den Metallfaden.

Die Enden des oder der Metallfäden sind zur Ermöglichung einer Kontaktierung federseitig aus der entsprechenden Harz-Faser-Matrix herausgeführt, vorzugsweise an den Enden der Feder, um eine möglichst große Länge des integrierten Metallfadens realisieren zu können. An den Fadenenden können entsprechende Anschlussmöglichkeiten zur Kontaktierung und Verbindung mit der Steuerungseinrichtung oder dergleichen vorgesehen sein.

Der Faserverbundwerkstoff kann beliebiger Natur sein, bevorzugt ist ein GFK, also ein glasfaserverstärkter Kunststoff, oder ein CFK, also ein kohlefaserverstärkter Verbundwerkstoff.

Die Feder kann vom Typ her beliebig ausgeführt sein. Denkbar ist die Ausführung der Feder als Schraubenfeder, Spiralfeder, Blattfeder, Tellerfeder oder Torsionsstabfeder, wobei diese Aufzählung selbstverständlich nicht abschließend ist.

Neben der Feder selbst betrifft die Erfindung ferner ein Kraftfahrzeug, wobei jedem Fahrzeugrad eine Dämpfungseinrichtung mit wenigstens einer Feder der beschriebenen Art zugeordnet ist.

Jeder Feder oder allen Federn gemeinsam kann eine Steuerungseinrichtung zugeordnet sein, die anhand erfasster Widerstandswerte die Federkraft und/oder die Radaufstandskraft des jeweils zugeordneten Rades ermittelt und wenigstens ein Betriebssystem des Kraftfahrzeugs in Abhängigkeit der ermittelten Kraftwerte steuert. Wie ausgeführt kann es sich hierbei um beliebige Fahrerassistenz- oder Regelsysteme des Fahrzeugs handeln.

Dabei ist es zweckmäßig, wenn die Steuerungseinrichtung die Plausibilität eines erfassten Widerstandswerts anhand der weiteren Widerstandswerte, die an einer Feder ermittelt werden, bestimmt. Dies setzt voraus, dass an jeder einzelnen Feder wenigstens zwei Metallfäden, die separate geometrieabhängige Widerstandswerte liefern, vorgesehen sind.

Dabei kann bei Vorhandensein mehrerer solcher Metallfäden ein Kraftwert erfasst werden, indem beispielsweise die erfassten Widerstandswerte gemittelt werden, oder gemäß einer entsprechenden Wichtungsvorgabe auch ein gewichteter Kraftwert bestimmt werden.

Schließlich ist es zweckmäßig, in der Steuerungseinrichtung mehrere definierten Temperaturen oder Temperaturintervallen zugeordnete Kennfelder betreffend den geometrieabhängigen Widerstandsverlauf eines Metallfadens abzulegen, wobei die Steuerungseinrichtung in Abhängigkeit der erfassten Raumtemperatur das temperaturzugeordnete Kennfeld wählt und der nachfolgenden Kraftwertermittlung zugrunde legt. Hierüber kann auch die wenngleich vorzugsweise geringe Temperaturabhängigkeit des Widerstandsverlaufs bei der Kraftwertermittlung berücksichtigt werden.

Weitere Vorteile, Merkmale und Einzelheiten der Erfindung ergeben sich aus dem im Folgenden beschriebenen Ausführungsbeispiel sowie anhand der Zeichnungen. Dabei zeigen:

Fig. 1 eine Prinzipdarstellung einer erfindungsgemäßen Feder in Form einer Schraubenfeder, die als Tragfeder für ein Kraftfahrzeug geeignet ist,

Fig. 2    eine Schnittansicht durch eine solche Feder gemäß einer ersten Ausführungsform mit sich längs der Feder erstreckendem Metallfaden,

Fig. 3    eine Schnittansicht entsprechend Fig. 2, wobei hier der Metallfaden um eine innere Seele gewunden ist, und

Fig. 4    ein erfindungsgemäßes Kraftfahrzeug.

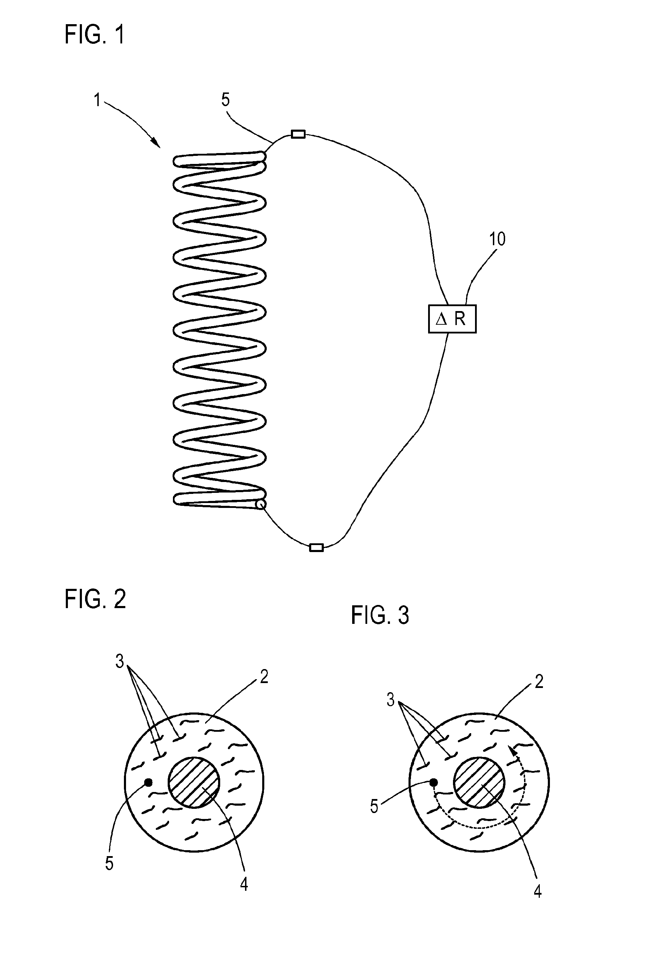

Fig. 1 zeigt eine erfindungsgemäße Feder 1 in Form einer Schraubenfeder, die aus einem Faserverbundwerkstoff (siehe die Figuren 2, 3) besteht. Lediglich exemplarisch ist in den Figuren 2 und 3 eine ausgehärtete Matrix 2 aus einem Harz oder dergleichen gezeigt, in welcher eine Vielzahl einzelner Fasern 3, beispielsweise Glasfasern oder Kohlenstofffasern, verteilt angeordnet sind. Wenngleich in den Figuren 2 und 3 die Fasern 3 regellos dargestellt sind, ist es selbstverständlich denkbar, die Fasern in Form eines Geleges oder Gewebes, mithin also einigermaßen gerichtet, einzubringen. Es handelt sich hierbei lediglich um Prinzipdarstellungen, die keinesfalls begrenzend sind.

Wie den Figuren 2 und 3 zu entnehmen ist, weist eine erfindungsgemäße Feder eine innenliegende Seele 4 beispielsweise aus einem elastischen Material auf, wobei eine solche Seele 4 jedoch nicht zwangsläufig vorzusehen ist. Um diese Seele 4 herum ist in den gezeigten Beispielen die Harzmatrix 2 und die Fasern 3 angeordnet, worüber die gesamte Feder ausgesteift ist und maßgeblich ihre Federeigenschaften bestimmt werden.

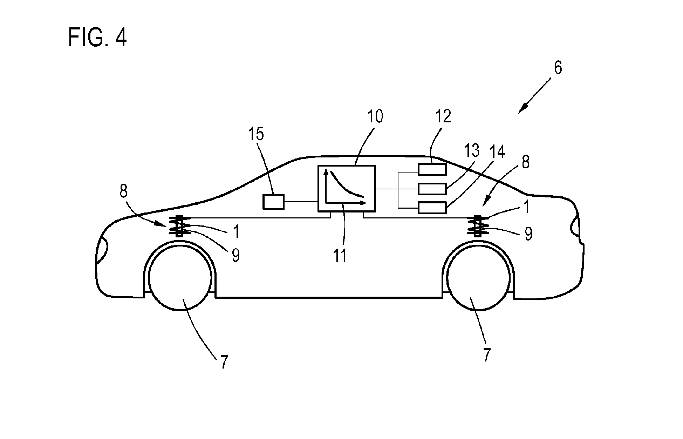

Wie die Figuren 1 - 3 zeigen, ist in der Feder integriert ein Metallfaden 5 aufgenommen, der, wie Fig. 1 exemplarisch zeigt, an den Federenden herausgeführt ist und an entsprechenden Kontaktstellen über eine Leitungsverbindung mit einer entsprechenden Steuerungseinrichtung 10 verbunden ist. Der Metallfaden ist aus einem Material, das eine möglichst große Widerstandsänderung in Abhängigkeit einer Geometrieänderung des Metallfadens 5 resultierend aus einer Änderung der Geometrie der Feder 1 zeigt. Der Metallfaden 5 ist fest und absolut unbeweglich in die Harzmatrix 2 eingebettet, so dass sichergestellt ist, dass er jedwede auch noch so geringe Federbewegung respektive Geometrieänderung mit vollzieht. Hieraus resultiert folglich eine Fadengeometrieänderung. Diese wiederum resultiert in einer wenngleich gegebenenfalls auch geringen Änderung des elektrischen Widerstands des Metallfadens. Wird nun über die Steuerungseinrichtung dieser elektrische Widerstand gemessen, indem über den Metallfaden ein geringer Messstrom geführt wird, so ist es möglich, aus dem gemessenen Widerstandswert die momentan gegebene Kraft, die mit der Geometrieänderung der Feder und damit der Widerstandsänderung korreliert ist, zu bestimmen. Die Kenntnis dieses Kraftwerts kann, worauf nachfolgend in Bezug auf Fig. 4 eingegangen wird, der weiteren Steuerung oder Regelung von Subsystemen verwendet werden.

Wie Fig. 2 zeigt, ist der Metallfaden 5 bei dieser Ausgestaltung der Feder quasi längslaufend und parallel zur innenliegenden Seele 4 geführt. Er erstreckt sich also über die Länge der Feder 1, das heißt, dass die Länge des Metallfadens quasi der Federlänge entspricht. Ein solcher Fadenverlauf ist beispielsweise dadurch zu erreichen, dass die Matrix 2 nebst den Fasern 3 beispielsweise über harzgetränkte Fasergewebe aufgebaut bzw. um die Seele 4 gewickelt wird. Zwischen zwei solche Lagen kann der Metallfaden 5 eingelegt werden. Anschließend wird die längliche Wicklung in die gewünschte Federform gebracht und die Matrix 2 ausgehärtet.

Alternativ dazu zeigt Fig. 3 die Möglichkeit, den Metallfaden 5 helixartig, also schraubenförmig, um die innere Seele 4 zu wickeln, das heißt, er windet sich quasi nach Art einer Doppelhelix einerseits um die Seele 4, andererseits aber auch entsprechend der Schraubenform der Feder selbst um die zentrale Federachse. Die Windung um die Seele 4 ist durch die gepunktete Pfeillinie dargestellt. Eine solche Fadenführung ist beispielsweise dadurch möglich, dass die Matrix 2 respektive die Fasern 3 durch um die innere Seele 4 rotierende Faserspulen, von denen die Fasern abgewickelt werden, gewickelt werden. Über eine solche Spule kann der Metallfaden 5 zugeführt werden, so dass auch hier ein mehrlagiges, gewickeltes Faserkonstrukt eingelegt werden kann.

Als Matrix kann jede beliebige aushärtbare Matrix verwendet werden, vorzugsweise auf Polymerbasis, wie beispielsweise ein Epoxiharz oder dergleichen. Als Metallfaden kann jeder beliebige Metallfaden verwendet werden, der in definierter Weise seinen Widerstand geometrieabhängig ändert.

Fig. 4 zeigt schließlich ein erfindungsgemäßes Kraftfahrzeug 6, umfassend vier Räder 7, von denen im gezeigten Beispiel nur zwei dargestellt sind. Jedem Rad 7 ist eine Dämpfereinrichtung 8 umfassend einen Stoßdämpfer 9 sowie eine erfindungsgemäße Feder 1 zugeordnet. Jede Feder 1 umfasst mindestens einen Metallfaden 5. Jeder Metallfaden 5 ist über entsprechende Leitungen mit der Steuerungseinrichtung 10 verbunden, die in der Lage ist, den jeweiligen elektrischen Widerstand jedes einzelnen Metallfadens zu erfassen. In der Steuerungseinrichtung 10 sind, wie in der Prinzipdarstellung dargestellt ist, ein oder mehrere Kennlinien 11, die den Widerstandsverlauf und die zugeordnete anliegende Kraft an der jeweiligen Feder 1 angeben, abgelegt. Aus der jeweiligen Kennlinie, worauf nachfolgend noch eingegangen wird, werden rein rechnerisch sodann die gegebenen Kraftwerte wie Federkraft oder Radaufstandskraft bestimmt. Diese können dann der Steuerung oder Regelung weiterer zugeordneter Fahrerassistenzsysteme 12 (z. B. ESP-System), 13 (z. B. ABS-System) oder 14 (z. B. automatische Dämpferregelung) zugeführt werden.

Wie Fig. 4 ferner zeigt, ist ein Temperatursensor 15 vorgesehen, der Informationen über die Umgebungs- oder Raumtemperatur im Bereich der Federn 1 liefert, der also letztlich die Außentemperatur misst. In der Steuerungseinrichtung 10 können nun mehrere temperaturspezifische Kennfelder 11 abgelegt sein, die entweder definierten Temperaturen oder definierten Temperaturintervallen zugeordnet sind. Anhand der ermittelten Umgebungs-Ist-Temperatur wählt nun die Steuerungseinrichtung die zugeordnete Kennlinie und legt sie sodann der nachfolgenden Steuerung zugrunde.

Wenngleich in den Figuren 1 - 3 wie auch 4 Federn gezeigt sind, die nur einen Metallfaden 5 aufweisen, ist es selbstverständlich denkbar, auch zwei oder mehr separate Metallfäden federseitig vorzusehen. Jeder einzelne Metallfaden ändert folglich bei einer Geometrieänderung der Feder seinen Widerstand. Die Steuerungseinrichtung 10 kann nun zu jedem einzelnen Metallfaden seine Widerstandsänderung erfassen. Die einzelnen Widerstandswerte können entweder zu Plausibilisierungszwecken untereinander berücksichtigt respektive verarbeitet werden, denkbar ist es aber auch, hieraus einen Mittelwert zu bilden etc.

Wie beschrieben erfolgt beim Ausführungsbeispiel gemäß Fig. 4 die Ermittlung der entsprechenden Kraftwerte anhand von Kennlinien. Dies ist nur eine Möglichkeit. Es ist auch denkbar, sie jeweils rein rechnerisch zu erfassen, gemäß folgenden Beziehungen:

$$R = \rho \frac{l}{A} = \rho \frac{4 \cdot l}{D^2 \cdot \pi}$$

Die einzelnen Formelzeichen stehen für folgende Größen:

$\rho$: spezifischer Widerstand
l: Drahtlänge
A: Querschnittsfläche
D: Durchmesser des Drahtes.

Die Widerstandsänderung bei Belastung beträgt allgemein:

$$\Delta R = \frac{\delta R}{\delta \rho} \cdot \Delta\rho + \frac{\delta R}{\delta l} \cdot \Delta l + \frac{\delta R}{\delta d} \cdot \Delta d,$$

Durch Differentiationen und Umformungen erhält man die relative Widerstandsänderung:

$$\frac{\Delta R}{R} = \frac{\Delta\rho}{\rho} + \frac{\Delta l}{l} - \frac{2 \cdot \Delta d}{d}$$

Die relative Widerstandsänderung ist von der Längs- und der Querdehnung abhängig.

$$\varepsilon = \frac{\Delta l}{l} \text{ und } \varepsilon_\rho = \frac{\Delta d}{d} = -\mu \cdot \varepsilon$$

Somit folgt:

$$\frac{\Delta R}{R} = k \cdot \frac{\Delta l}{l} = k \cdot \varepsilon$$

wobei $\kappa$ den sogenannten k-Faktor darstellt:

$$k = \frac{\Delta \rho}{\rho \cdot \varepsilon} + 1 + 2 \cdot \mu$$

Die einzelnen Formelzeichen stehen für folgende Größen:

$\varepsilon$: relative Längenänderung
$\varepsilon_\rho$: relative Querschnittsänderung
$\mu$: Querdehnungszahl
k: k-Faktor.

Für eine Schraubenfeder mit Metallfaden in der äußersten Schicht wird die Federkraft wie folgt ermittelt:

$$F = \frac{\pi d^3 \cdot \varepsilon \cdot G}{8 D m}$$

F: Kraft
D: Durchmesser des Fadens
$\varepsilon$: Dehnung
G: Schubmodul des Tragfederwerkstoffes
$D_m$: Mitteldurchmesser des Schraubenfederzylinders.

**Patentansprüche**

1. Feder, insbesondere Tragfeder für ein Kraftfahrzeug, bestehend aus einem Faserverbundwerkstoff,
   **dadurch gekennzeichnet,**
   **dass** wenigstens ein Metallfaden (5) vorgesehen ist, der seinen elektrischen Widerstand in Abhängigkeit der Verformung der Feder (1) ändert.

2. Feder nach Anspruch 1,
   **dadurch gekennzeichnet,**
   **dass** mehrere jeweils separat hinsichtlich ihrer Widerstandsänderung erfassbare Metallfäden (5) vorgesehen sind.

3. Feder nach Anspruch 1 oder 2,
   **dadurch gekennzeichnet,**
   **dass** der oder die Metallfäden (5) im Inneren der Feder (1) integriert oder an der Außenseite der Feder (1) angeordnet sind.

**4.** Feder nach einem der vorangehenden Ansprüche,
**dadurch gekennzeichnet,**
**dass** die Enden des oder der Metallfäden (5), vorzugsweise an den Enden der Feder (1), zur Ermöglichung einer Kontaktierung herausgeführt ist.

**5.** Feder nach einem der vorangehenden Ansprüche,
**dadurch gekennzeichnet,**
**dass** der Faserverbundwerkstoff ein GFK oder CFK ist.

**6.** Feder nach einem der vorangehenden Ansprüche,
**dadurch gekennzeichnet,**
**dass** sie als Schraubenfeder, als Spiralfeder, als Blattfeder, als Tellerfeder oder als Torsionsstabfeder ausgeführt ist.

**7.** Kraftfahrzeug, wobei jedem Fahrzeugrad eine Dämpfungseinrichtung mit wenigstens einer Feder (1) nach einem der vorangehenden Ansprüche zugeordnet ist.

**8.** Kraftfahrzeug nach Anspruch 7,
**dadurch gekennzeichnet, dass**
dass der oder den Federn (1) eine Steuerungseinrichtung (10) zugeordnet ist, die anhand erfasster Widerstandswerte die Federkraft und/oder die Radaufstandskraft ermittelt und wenigstens ein Betriebssystem (12, 13, 14) des Kraftfahrzeugs in Abhängigkeit der ermittelten Kraftwerte steuert.

**9.** Kraftfahrzeug nach Anspruch 8,
**dadurch gekennzeichnet,**
**dass** die Steuerungseinrichtung (10) die Plausibilität eines erfassten Widerstandswerts anhand der weiteren Widerstandswerte ermittelt.

**10.** Kraftfahrzeug nach Anspruch 8 oder 9,
**dadurch gekennzeichnet,**
**dass** die Steuerungseinrichtung (10) die separaten Widerstandswerte mehrerer federseitig vorgesehener Metallfäden (5) erfasst und anhand aller erfasster Widerstandswerte einen gemittelten oder gewichteten Kraftwert ermittelt.

**11.** Kraftfahrzeug nach einem der Ansprüche 7 bis 10,
**dadurch gekennzeichnet,**
**dass** in der Steuerungseinrichtung (10) mehrere definierten Temperaturen oder Temperaturintervallen zugeordnete Kennfelder (11) betreffend den geometrieabhängigen Widerstandsverlauf eines Metallfadens (5) abgelegt sind, wobei die Steuerungseinrichtung (10) in Abhängigkeit der erfassten Raumtemperatur das temperaturzugeordnete Kennfeld (11) wählt.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7311124 B2

- US 20090243174 A1